# EUROPEAN PATENT SPECIFICATION

(11) **EP 0 740 140 B1**
(45) Date of publication and mention of the grant of the patent: **18.07.2001**
(21) Application number: 96302202.5
(22) Date of filing: 29.03.1996
(51) Int. Cl.: G01M 1/22

(54) **Vibration evaluation method for rotary body in static field**
Verfahren zur Vibrationsschätzung für rotierenden Körper in einem statischen Feld
Méthode d'évaluation de vibration pour corps rotatifs en champ statique

(30) Priority: 27.04.1995 JP 12720895
(43) Date of publication of application: 30.10.1996
(73) Proprietor: JAPAN NUCLEAR CYCLE DEVELOPMENT INSTITUTE, Naka-gun Ibaraki-ken (JP)
(72) Inventor: Kikuchi, Kiyotaka 1700-1, Shirakata, Ibaraki-ken (JP); Gunji, Kiyoshi 2556, Narota-cho, Ibaraki-ken (JP)
(74) Representative: Charlton, Peter John

(56) References cited:
- EP-A- 0 193 609
- US-A- 5 097 355
- PATENT ABSTRACTS OF JAPAN vol. 007, no. 156 (P-209), 8 July 1958 & JP 58 066826 A (TOKYO SHIBAURA DENKI KK), 21 April 1983,
- DATABASE WPI Section EI, Week 8409 Derwent Publications Ltd., London, GB; Class S02, AN 84-055428 XP002026259 & SU 1 016 720 A (KUPRYASHOV V D) , 7 May 1983

## Description

This invention relates to a method of evaluating the vibration of a rotary body in a static field, and more particularly to a vibration evaluation method adapted to obtain a vibrational response very similar to that in a rotational field from which a gyroscopic effect due to the rotation of a rotary body is eliminated, by applying a rotational exciting force to the rotary body with the rotary body maintained in a non-rotational condition.

A rotary machine has a critical speed at which a vibration amplitude increases suddenly when a revolution velocity thereof increases to coincide with a natural frequency. When a rotary body having a plurality of critical speeds is rotated, the rotational speed thereof passes the critical speeds constituting vibration resonance points, to reach a rated revolution velocity. If a vibration damper cannot be set optimumly at a critical speed, the unbalance occurring during the manufacture of the rotary machine appears as a violent vibrational response at a critical speed, and the rotary machine is put in an unstable vibrational condition. Consequently, the breakage of bearings occurs, and the rotating of the rotary body becomes impossible. Therefore, the vibration damper is set optimumly during the vibration designing of and a vibration test for the rotary machine. Accordingly, in order to design and manufacture a rotary machine, it is necessary to obtain a vibrational response of a rotary body first.

When the length and revolution velocity of a rotary body in a rotary machine increase, the critical speed vibration thereof shows a complicated mode of occurrence. Consequently, a vibration design analysis of the rotary body is carried out, and a critical speed at which the rotary body forms a vibration-stable system is set, but a satisfactory rotary body just as designed is not necessarily obtained due to a difference in physical properties. When a critical speed error is large, the vibration of the rotary body becomes unstable, and the rotary body becomes unable to be rotated. Therefore, it is necessary to subject a rotary body to a vibration test in a static field, grasp a mode of occurrence of vibration at a critical speed and secure the rotational performance, before the rotary body is rotated.

The conventional techniques for evaluating the vibration of a rotary body by vibrating the rotary body in a static field include the following.
(1) A method of striking a rotary body with an impulse hammer.
(2) A method of vibrating a rotary body by an electrodynamic loudspeaker via the air.
(3) A method of vibrating a rotary body directly by an electrodynamic system.
(4) A method of vibrating a rotary body directly by an electrohydraulic system.
(5) A method of vibrating a rotary body by attracting an iron shaft thereof to an electromagnet.

All of these methods are basically one-dimensional vibrating methods, which are divided into methods of vibrating a rotary body in a suspended state, and methods of vibrating a rotary body inclusive of a static body.

Among these conventional techniques for vibrating a rotary body in a static field, the method (1) of striking a rotary body with an impulse hammer is simple but an exciting force obtained is small, so that conducting a highly accurate measurement is difficult; the method (2) of vibrating a rotary body by a loudspeaker has an advantage that the vibrating of the rotary body can be done in a non-contacting manner but an exciting force is small. Since an air-borne exciting force is utilized, an exciting force transmission delay occurs; the electrodynamic type direct vibrating method (3) brings about a result different from an originally expected result since a vibrating object is fixed directly to a rotary body; the electrohydraulic system (4) has a problem that vibrating a rotary body with a high frequency is difficult; and the electromagnetic attraction system (5) cannot be applied to a non-magnetic rotary body, and provides a small exciting force to even a magnetic rotary body. The results of the one-dimensional vibrating operations in all of these methods show that membranous vibration, which does not occur in a rotating field, occurs in addition to critical speed vibration, that different data are obtained due to the variation of the suspended condition of the rotary body,'and that the accuracy of the data is unable to be ensured since the resonance of a static body occurs as well when such a static body is included. When the accuracy of the data is low, a critical speed cannot be set accurately, and this has great influence upon the operation efficiency of a subsequent practical rotation test.

According to the conventional techniques, a rough test is conducted by the above-mentioned methods. However, when a rotary body is designed and manufactured, it is necessary to install the rotary body in a practical rotary machine, measure the unbalanced vibration with the machine in operation and determine a profile of a critical speed. For example, in order to measure the vibration at an N-th order critical speed in an N-th order passing type rotary machine, it is necessary first to damp the first to (N-1)th order vibrations to exceed a critical speed. According to the balancing techniques, the vibration is suppressed by adding a balance weight to a rotary body or, conversely, cutting off a part of the rotary body on the basis of the measured unbalanced vibration. Utilizing the data, which are obtained by thus balancing a plurality of critical speeds, for the designing of a rotary body requires many process steps and very troublesome work which takes much time and labor.

If a profile (the characteristics of vibration amplitude with respect to rotational frequency) of a critical speed can be grasped accurately by conducting a test in a static field without rotating a rotary body before designing and manufacturing a rotary body, it becomes possible to set frequencies at critical speeds suitably and attain a rated revolution velocity very stably, the operation efficiency being therefore improved greatly. The development of such a novel method has strongly been demanded.

In a rotary machine, a critical speed also exists even in a region exceeding a rated revolution velocity. For example, when a critical speed exists in a rotational frequency region somewhat higher than a rated revolution velocity, the rated rotational vibration becomes unstable. However, a profile of a critical speed not lower than a rated revolution velocity cannot be grasped accurately since a rotary body cannot be rotated practically at such a critical speed. According to the conventional techniques, a profile of a critical speed not lower than a rated revolution velocity is determined simply by estimation in view of the influence upon an analysis value and rated rotational vibration.

An object of the present invention is to provide a vibration evaluation method capable of determining a profile of a critical speed of a rotary body in a non-rotating condition in a short period of time in safety and with a high accuracy, and thereby improving the work efficiency in the designing and manufacturing of a rotary machine.

Another object of the present invention is to provide a method capable of accurately determining a profile of a passing critical speed of a rotary body and that of a critical speed thereof in a region exceeding a rated revolution velocity.

According to the present invention, there is provided a vibration evaluation method for a rotary body in a static field comprising maintaining a rotary body in a non-rotating condition; providing a rotary vibrator for applying a rotational exciting force to the rotary body, a vibration sensor for detecting the vibration of the rotary body, and a vibration meter for measuring an output from the vibration sensor; and measuring a vibrational response of the rotary body by sweeping a rotational frequency of the rotational exciting force applied from the rotary vibrator to the rotary body, whereby the vibrational characteristics of the rotary body in a simulated rotational field are obtained.

The rotary vibrator used in the method of the present invention is preferably provided with a structure comprising a ring-shaped magnet bipolarly magnetized and mounted on a shaft of the rotary body coaxially, a ring-shaped stator having a coil and adapted to generate a rotating magnetic field by controlling an electric current supplied to the coil, and a frequency-variable vibration power source adapted to supply an alternating electric power to the coil of the stator. The magnet and the stator have different magnetic radii and are disposed so as to be opposed to each other in a direction identical with the magnetization direction of the magnet to thereby apply the rotational exciting force to the rotary body by an interaction of the rotating magnetic field generated by the stator with the magnet. The vibration evaluation is carried out by sweeping a frequency of the rotating magnetic field generated by the stator with the rotary body maintained in a non-rotating condition by bearings. The magnet may be a permanent magnet or an electromagnet.

When an alternating electric power of a predetermined frequency is supplied to the coil on the stator, the rotating magnetic field corresponding thereto is generated. Owing to an interaction of the magnetic field generated by the stator with the magnet, an eccentric force is exerted on the rotary body, and this eccentric force rotates with the rotating magnetic field of the stator. This turns into rotational vibration to vibrate the rotary body, which then shows a vibrational response very similar to the critical speed vibration in a rotating field. This enables a critical speed, which is difficult to be ascertained by the above-described conventional one-dimensional vibrating methods practiced in a static field, to be determined. A critical speed existing in a region exceeding a rated revolution velocity can also be determined concretely by merely increasing the frequency of the alternating electric power supplied to the stator.

Fig. 1 is an explanatory drawing showing an embodiment of the vibration evaluation method for a rotary body in a static field according to the present invention.

Fig. 2 is a detailed explanatory drawing showing an example of a rotary vibrator used in the method of the present invention.

Fig. 3 is an explanatory drawing showing an example of the relation between the rotational frequency and vibrational amplitude characteristics determined by the method of the present invention.

Fig. 4 is an explanatory drawing showing another example of the rotary vibrator used in the method of the present invention.

Fig. 5 is an explanatory drawing showing still another example of the rotary vibrator used in the method of the present invention.

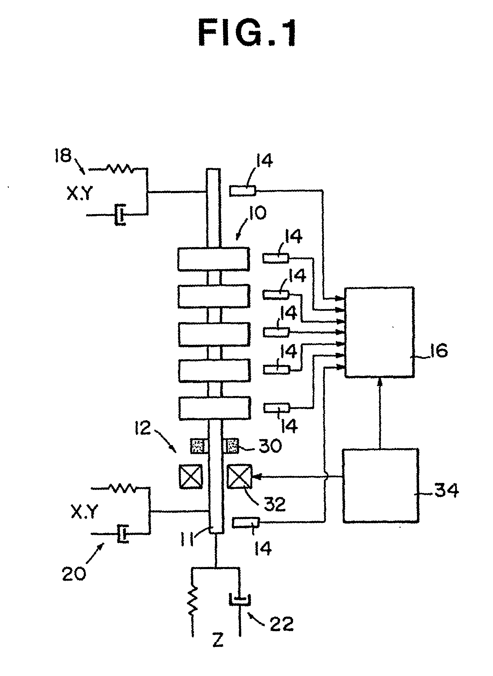

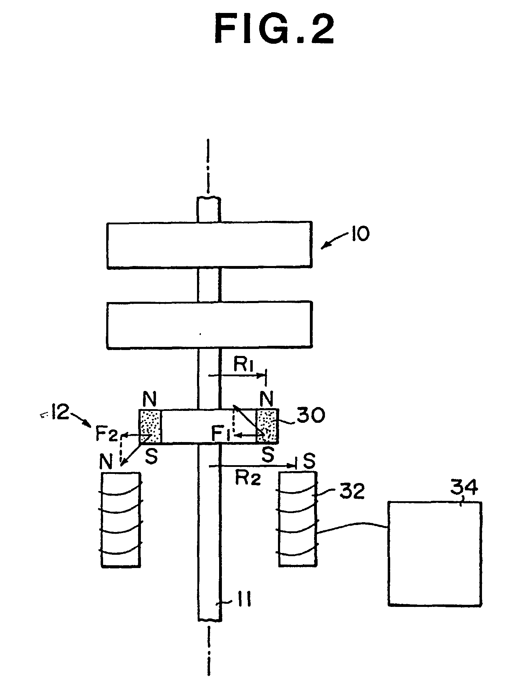

Fig. 1 is a schematic diagram showing an embodiment of the vibration evaluation method for a rotary body in a static field according to the present invention, and Fig. 2 an explanatory view of a rotary vibrator, a principal part of the present invention. The vibration evaluation method for a rotary body in a static field shown in Fig. 1 has the steps of maintaining a rotary body 10 in a non-rotating condition; providing a rotary vibrator 12 for applying a rotational exciting force to the rotary body 10, vibration sensors 14 for detecting the vibration of the rotary body 10, and a vibration meter 16 for measuring outputs from the vibration sensors 14. A vibrational response is measured by sweeping a rotational frequency of the rotational exciting force. Thus the vibrational characteristics of the rotary body 10 in a simulated rotational field are obtained.

The rotary body 10 is supported in the same manner as it is supposed to be supported in a rotating field in a rotary machine in which the rotary body 10 is to be installed practically. In this embodiment, the rotary 10 body is supported in a horizontal plane (XY direction) by upper and lower radial bearings 18, 20 having springs and dampers, and in a vertical direction (Z direction) by a thrust bearing 22 also having a spring and a damper.

As shown in detail in Fig. 2, the rotary vibrator 12 is adapted to apply a rotational exciting force to the rotary body 10, and comprises a ring-shaped permanent magnet 30, a ring-shaped stator 32 having a coil and a vibration power source 34. The permanent magnet 30 is bipolarly magnetized in the axial direction, and mounted on the rotary body 10 (a shaft 11 of the rotary body in this embodiment) coaxially. The stator 32 may have the same construction as a regular induction motor, and is adapted to generate a substantially bipolar rotating magnetic field with an electric current supplied to the coil thereof and controlled properly. The permanent magnet 30 and the stator 32 have different magnetic radii (distance between a position in which a magnetic pole is formed and the axis of the rotary body shaft 11, the magnetic radii of the permanent magnet and the stator being represented by symbols R1, R2 respectively), and are disposed so as to be opposed to each other in the axial direction. The vibration power source 34 is a frequency-variable inverter for supplying an alternating electric power to the coil of the stator 32.

In the rotary vibrator structure of Fig. 2, the ring-shaped permanent magnet 30 is magnetized so that, for example, the upper and lower surfaces thereof have an N-pole and an S-pole respectively. Assume that an S-pole and an N-pole occur at a certain instant in the right and left side portions respectively in the drawing of the stator 32 due to a current supplied to the coil. Consequently, a left-upward electromagnetic force due to the repulsive force of the S-poles occurs in the right side portion in the drawing, while a left-downward electromagnetic force due to an attractive force between the N- and S-poles occurs in the left side portion in the drawing. If they are synthesized, the components in the axial direction of the permanent magnet 10 are in opposite directions and are therefore offset each other but the components F1, F2 in the direction (in a horizontal plane in the drawing) perpendicular to the axial direction are in the same direction and are therefore summed up to turn into an eccentric force. The direction of a magnetic field occurring in the stator 32 changes circularly in accordance with the frequency of the alternating electric power supplied from the vibration power source 34, so that the direction of an electromagnetic eccentric force supplied to the permanent magnet 30 also changes circularly. This eccentric force can be controlled on the basis of a value of the alternating current supplied to the stator 32. Namely, owing to the interaction of the rotating magnetic field generated in the stator 32 with the permanent magnet 30, a desired level of rotational exciting force can be applied to the rotary body 36, and an electric input generates a high-quality exciting force of a rotational vibration vector.

The inverter used as the vibration power source 34 is generally set to be rectangular wave voltage-frequency variable by temporarily turning the commercial electric current into a direct current, and carrying out the positive-negative voltage switching in accordance with the frequency. Such a rectangular wave inverter is commercially available and can be obtained easily at a low price. The waveform of the vibrating AC power may be a sine waveform in addition to a rectangular waveform. However, a sine wave inverter is expensive and not general.

Returning to Fig. 1, the vibration sensors 14 for detecting the vibration of the rotary body 10 are provided solely or plurally in the vicinity of the rotary body 10. A vibration meter 16, such as an oscilloscope or a FFT (high-speed Fourier transformer) for determining vibration amplitude is connected to the vibration sensors 14.

The vibration power source 34 is adapted to gradually sweep the frequency of the alternating electric power supplied to the stator 32 from a low frequency region to a high-frequency region exceeding a critical speed. In accordance with this sweeping operation, the frequency of the rotating magnetic field generated from the stator 32 is also swept, and a vibrational response made during this time is measured with the vibration sensors 14 and the vibration meter 16. As a result, the vibration characteristics in a simulated rotational field are obtained. Since the vibrational response of the rotary body includes the influence of the ring-shaped permanent magnet 30 mounted on the rotary body, the ring-shaped permanent magnet preferably has the same shape and mass as a rotor of a rotary body-rotating driving motor. When the permanent magnet for rotationally vibrating the rotary body is practically installed in a rotary machine, it is replaced by the rotor of the driving motor. When the mass of the ring-shaped permanent magnet 30 is different from that of the rotor of the driving motor, the obtained vibration characteristics are subjected to required correction. In the structure of Fig. 1, the stator of the driving motor can be utilized as it is for the stator 32 for rotationally vibrating the rotary body.

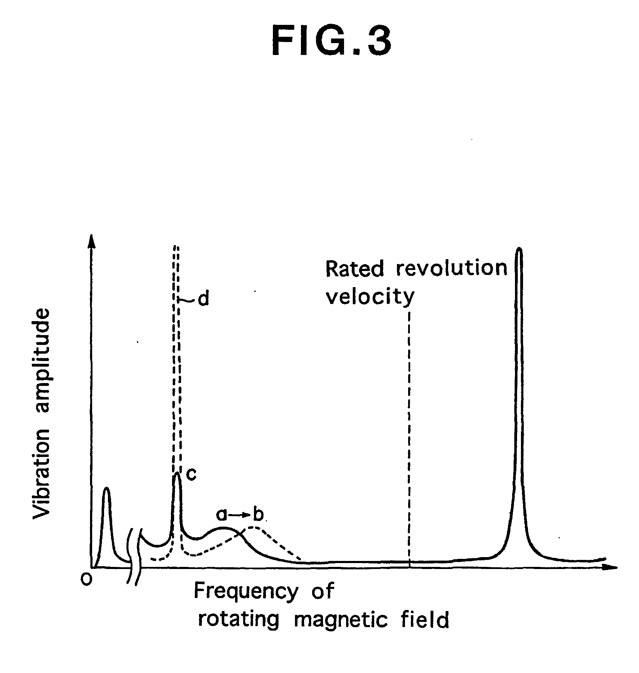

Fig. 3 is a schematic diagram showing an example of the relation determined by the method according to the present invention between the rotational frequency and vibration amplitude of a test rotary body (in order to simplify a description, a part of a vibrational response is omitted). This enables the profiles (vibration damping characteristics and arrangement thereof) of critical speeds to be read clearly. As shown in the drawing, even the critical speeds at rotational frequencies higher than the rated revolution velocity can be measured. If a critical speed shown by a letter a shifts to a position b shown by a broken line, it is considered that a critical speed shown by a letter c vibrate-responds violently as shown by a letter d (broken line) and diverges (breakage occurs in an actual rotating field). Since such profiles of critical speeds can be determined simply in a static field, the designing and manufacturing of the rotary body can be done safely and easily. When a gyromagnetic effect is large, correction is required.

The waveform of the alternating electric power supplied from the vibration power source 34 may be a rectangular waveform as mentioned above but, especially, in order to obtain data of a high-degree accuracy, a sine waveform of a single frequency is preferable. Vibrating a rotary body with alternating electric power having a rectangular waveform becomes a complex vibrating operation of a basic frequency and an odd number-multiplied frequency (vibrating a rotary body with alternating electric power having a waveform other than a sine waveform becomes a vibrating operation similar to this vibrating operation), so that, when a critical speed exists in an odd number-multiplied frequency during a vibrating operation with a target basic frequency, a vibrational response is made. When an inverter of a rectangular waveform is used, voltages of odd number-multiplied frequencies become smaller in the order of increasing multiples, and the levels of exciting force become inversely proportional to the frequency, so that a vibrational response is small. However, it should be noted that a region in which the basic frequency is swept becomes wide. Conversely, if these characteristics are utilized, a vibrating operation in a high frequency region can be carried out.

It is considered that the above-described example of the rotary vibrator for a rotary body used in the present invention is an optimum example but a structure for applying a rotational exciting force to a rotary body is not limited to this example. Although a permanent magnet is used as the ring-shaped magnet, it may be replaced by an electromagnet. Since the rotary body is placed in a static field, the supply of an electric current to an electromagnet can be done easily.

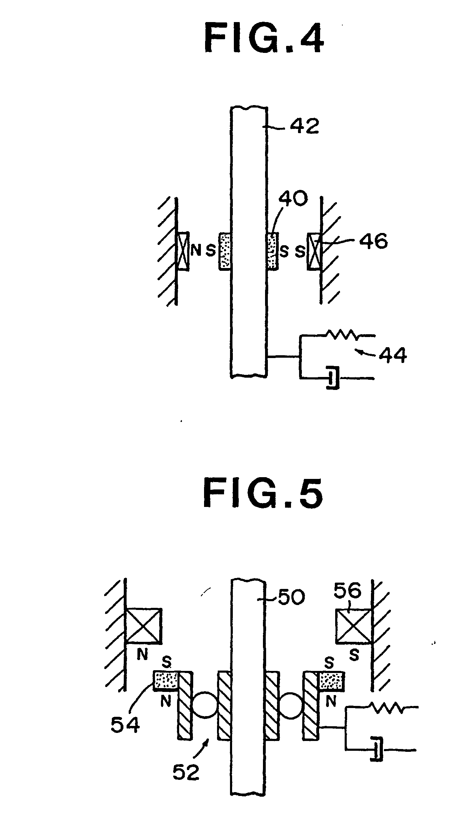

It is also possible that a magnet and a stator be disposed in the same plane. An example of such an arrangement is shown in Fig. 4. A ring-shaped permanent magnet 40 is radially bipolarly magnetized (the outer circumferential surface has an S-pole, and the inner circumferential surface an N-pole) and mounted on a rotary body 42. The rotary body 42 is supported by a bearing 44. A stator 46 is ring-shaped, and adapted to generate a rotating magnetic field with an electric current, which is supplied to a coil and controlled properly. The permanent magnet 40 and stator 46 are disposed in the same plane so as to be opposed to each other in the radial direction (i.e., the permanent magnet 40 is positioned on the inner side of the stator 46). If a magnetic field generated by the stator 46 in this structure at a certain instant is directed, for example, as shown in Fig. 4, an attractive force of different poles occurs in a left portion of the rotary body 42, while a repulsive force of the same poles occurs in a right portion of the rotary body. Consequently, a leftward force is exerted on the rotary body 42. Since this force rotates with the rotating magnetic field generated by the stator 46, the rotary body 42 receives a rotational exciting force.

Although the magnet is mounted directly on the rotary body in both of the above-described examples as shown in Figs. 2 and 4, it may be mounted via a bearing. Such an example is shown in Fig. 5. The inner surfaces of ball bearings 52 are fixed to a rotary body 50, and a ring-shaped permanent magnet 54 is mounted on the outer circumferential surfaces thereof. In this example, the permanent magnet 54 is axially bipolarly magnetized just as the permanent magnet 30 shown in Fig. 2. A ring-shaped stator 56 is disposed so as to be opposed axially to the permanent magnet 54. Such an arrangement of the magnet mounted via bearings has the advantage that a rotary body need not be provided with any additional parts. Namely, the rotary body is left mounted with a rotor of a rotary body-rotating driving motor. The ball bearings 52 may be considered as parts corresponding to the bearing 20 shown in Fig. 1, to which bearings a rotational exciting force is applied to measure a vibrational response.

According to the present invention, a high-quality rotational exciting force can be applied to a rotary body with an electromagnetically high efficiency by inputting a rotating magnetic field into the rotary body, in the condition in which the rotary body is disposed as if it were rotated. Therefore, the rotary body makes a vibrational response, which is very similar to that obtained in a rotating field in which the gyroscopic effect due to the rotation of the rotary body is eliminated at a critical speed, though the rotary body is in a static field. Accordingly, a profile of a critical speed can be obtained simply with a high accuracy, and the evaluation of vibration can be carried out easily, by merely sweeping the frequency of a rotating magnetic field.

When anisotropy exists in a rotary body, the directivity thereof appears in the vibration according to the method of the present invention, so that the symmetry of the rotary body can be grasped. Since the rotary body is not actually rotated, the arrangement of critical speeds and the vibrational amplitude thereof even in a region exceeding a rated revolution velocity can be determined concretely.

This enables the operation efficiency in the designing and manufacturing of a rotary machine to be improved, and an optimum arrangement of critical speeds to be attained easily. Since a critical speed and a vibration mode can be grasped before a rotation test is conducted, the accuracy and efficiency of a vibration balancing operation can be improved. Moreover, the present invention can be applied to a performance evaluation test for vibration elements, such as bearings.

## Claims

1. A vibration evaluation method for a rotary body in a static field comprising
maintaining a rotary body in a non-rotating condition;
providing a rotary vibrator for applying a rotational exciting force to said rotary body, a vibration sensor for detecting the vibration of said rotary body, and a vibration meter for measuring an output from said vibration sensor; and
measuring a vibrational response of said rotary body by sweeping a rotational frequency of the rotational exciting force applied from said rotary vibrator to said rotary body, whereby the vibrational characteristics of said rotary body in a simulated rotational field are obtained.

2. The vibration evaluation method according to claim 1, wherein said rotary vibrator is provided with a structure comprising a ring-shaped magnet bipolarly magnetized and mounted on a shaft of said rotary body coaxially, a ring-shaped stator having a coil and adapted to generate a rotating magnetic field by controlling an electric current supplied to said coil, and a frequency-variable vibration power source adapted to supply an alternating electric power to said coil in said stator, said magnet and said stator having different magnetic radii and being disposed so as to be opposed to each other in a direction identical with the magnetization direction of said magnet to thereby apply the rotational exciting force to said rotary body by an interaction of the rotating magnetic field generated by said stator with said magnet, a frequency of said rotating magnetic field generated by said stator being swept with said rotary body maintained in a non-rotating condition by bearings.

## Patentansprüche

1. Vibrationsabschätzungsverfahren für einen Rotationskörper in einem statischen Feld umfassend:
einen Rotationskörper in einem rotationslosen Zustand halten,
einen Rotationsvibrator vorsehen, um eine Rotationsanregungskraft auf den Rotationskörper aufzubringen, einen Vibrationssensor zum Nachweis der Vibration des Rotationskörpers und einen Vibrationsmesser zum Messen eines Outputs vom Vibrationssensor, und
durch Verschieben einer Rotationsfrequenz der Rotationsanregungskraft, die vom Rotationsvibrator auf den Rotationskörper aufgebracht wird, eine Vibrationskurve des Rotationskörpers messen, wodurch die Vibrationscharakteristik des Rotationskörpers in einem simulierten Rotationsfeld erhalten wird.

2. Vibrationsabschätzungsverfahren nach Anspruch 1, worin der Rotationsvibrator mit einer Struktur versehen ist, die einen ringförmigen bipolar magnetisierten und auf einer Welle des Rotationskörpers koaxial angebrachten Magneten umfasst, einen ringförmigen Stator mit einer Spule und geeignet zur Erzeugung eines rotierenden Magnetfeldes durch Steuern eines auf die Spule zugeführten elektrischen Stroms, und eine frequenzvariable Vibrationskraftquelle geeignet einen elektrischen Wechselstrom zur Spule im Stator zuzuführen, wobei der Magnet und der Stator unterschiedliche Magnetradien aufweisen und so angeordnet sind, dass sie in einer Richtung, die mit der Magnetisierungsrichtung des Magneten identisch ist, einander gegenüberstehen, um dadurch die Rotationsanregungskraft auf den Rotationskörper durch eine Wechselwirkung des durch den Stator erzeugten rotierenden Magnetfeldes mit dem Magneten aufzubringen, wobei eine Frequenz des durch den Stator erzeugten rotierenden Magnetfeldes verschoben wird, wobei der Rotationskörper durch Lager in einem rotationslosen Zustand gehalten wird.

## Revendications

1. Procédé d'évaluation des vibrations pour un corps rotatif dans un champ statique comprenant les étapes consistant à :
maintenir un corps rotatif dans un état non-rotatif ; prévoir un vibrateur rotatif pour appliquer une force d'excitation rotationnelle audit corps rotatif, un capteur de vibrations pour détecter la vibration du corps rotatif et un dispositif de mesure de vibrations pour mesurer une sortie dudit capteur de vibrations, et
mesurer une réponse vibratoire dudit corps rotatif en en faisant varier une fréquence de rotation de la force d'excitation rotationnelle appliquée depuis ledit vibrateur rotatif audit corps rotatif, avec pour effet que les caractéristiques de vibration du corps rotatif dans un champ rotatif simulé sont obtenues.

2. Procédé d'évaluation des vibrations selon la revendication 1, dans lequel ledit vibrateur rotatif est muni d'une structure comprenant un aimant en forme d'anneau magnétisé bipolairement et monté coaxialement sur un arbre dudit corps rotatif, un stator en forme d'anneau ayant une bobine et conçu pour générer un champ magnétique rotatif en commandant un courant électrique délivré à ladite bobine, et une source d'énergie de vibrations à fréquence variable conçue pour délivrer une énergie électrique alternative à ladite bobine dans ledit stator, ledit aimant et ledit stator ayant des rayons magnétiques différents et étant disposés de façon à être mutuellement opposés dans une direction identique à la direction de magnétisation dudit aimant pour appliquer de ce fait la force d'excitation rotationnelle audit corps rotatif par une interaction du champ magnétique rotatif généré par ledit stator avec ledit aimant, une fréquence dudit champ magnétique rotatif généré par ledit stator étant variée, ledit corps rotatif étant maintenu dans un état non-rotatif par des paliers.
